**Europäisches Patentamt**

**European Patent Office**

**Office européen des brevets**

(19)

(11) Publication number : **0 309 289 B1**

# EUROPEAN PATENT SPECIFICATION

(12)

(45) Date of publication of patent specification :
**19.02.92 Bulletin 92/08**

(21) Application number : **88308892.4**

(22) Date of filing : **26.09.88**

(51) Int. Cl.⁵ : **G01L 1/00**, G01L 5/00,
G01N 29/00

(54) Method for measuring internal contact pressure between mating solid parts separated by a liquid film.

(30) Priority : **25.09.87 GB 8722637**

(43) Date of publication of application :
**29.03.89 Bulletin 89/13**

(45) Publication of the grant of the patent :
**19.02.92 Bulletin 92/08**

(84) Designated Contracting States :
**AT BE CH DE ES FR GB GR IT LI LU NL SE**

(56) References cited :
**AU-D- 8 275 382**

(73) Proprietor : **CENTRE FOR FRONTIER
ENGINEER RESEARCH
Building 7A University of Alberta Campus
Edmonton Alberta T6G 2E2 (CA)**

(72) Inventor : **Slack, Maurice William
1831-104a Street
Edmonton, Alberta T6J 5C1 (CA)**

(74) Representative : **Atkinson, Ralph et al
Appleyard Lees 15 Clare Road
GB-Halifax, W. Yorkshire HX1 2HY (GB)**

# Description

The present invention relates to methods for measuring the internal contact pressure on the interfaces of two mating solid surfaces undergoing compression when the interfacial region contains an entrapped film or liquid, grease or slurry.

Many industrial assemblies involve a thin film of liquid being compressed in the interfacial region between two mating solid surfaces. A typical case, in the context of which the present invention was developed, is the "premium connection" uniting two lengths of oilfield tubing in end-to-end relation. Such a connection comprises two externally threaded pipe ends (pins) screwed tightly into each end of an internally threaded coupling (box). The pins carry annular lands which press against annular lands carried by the boxes to effect circumferential pressure seals remote from the threads. A lubricant/sealant, referred to as thread compound or "dope", is disposed as a thin film between the mating parts. The term "liquid film" is intended herein to encompass a pure liquid, or a grease, or a slurry of solids in liquid or grease (of which thread compound is an example).

The liquid film is subjected to a normal compressive stress or "contact pressure". Contact pressure can be defined as the compressive stress between two solid bodies, normal to the interface surfaces thereof, which is created by the application of external force to said bodies.

Determining the contact pressure between mating parts is of importance for general stress analysis and in particular for ascertaining the effectiveness of the seal being created. However, present methods for doing this are only of limited usefulness. The methods available can be characterised as "direct" or "indirect".

Indirect methods involve first developing a stress analysis model by photoelastic, analytical or numeric means. A load is then applied to the specimen and external measurements of stress, strain or applied load are made using instruments such as a strain gauge. The stress analysis model and external measurements are then combined to estimate the internal contact pressure of the specimen. These methods can at best give a measure of the average contact pressure and cannot account for variations arising from actual geometrics or other variables versus modelled assumptions. Furthermore few three dimensional effects can be inferred.

There is only one existing direct method available for this purpose, to the applicant's knowledge. This involves neutron defraction strain measurement. The method is directed toward measuring the strain between crystal lattice planes inside the solid parts. If the region examined is directly inside a loaded contact surface, the contact pressure can be inferred from the relationship between strain and stress. However this procedure is time consuming to carry out and involves very complex instruments and calculations that are not suited for use outside a specialised laboratory.

So there presently exists a need for a means that can be used in the field to directly measure the internal contact pressure on the surfaces of mating solid parts having a thin film of liquid being compressed therebetween. In a narrower sense, there exists a need in the oilfield tubing premium connection art for a means that can be used when making up the threaded parts to measure the metal-to-metal sealing surface contact pressures and determine when they reach a desired pre-stress.

It is known in the art that changes in the pressure of an acoustic wave reflected from, or transmitted through, the interfacial region between contacting solid bodies are correlative with changes in contact pressure. This known theory is applied in, for example, the teachings of U.S. Patent 4,484,475. However, this patent is concerned with the contact pressure of two surfaces having an air gap between the mating surfaces and not a thin liquid film. Thus, different physical principles governing the correlative relationship between contact pressure and reflection coefficient for each case apply.

The present invention involves the adaption of existing ultrasonic flaw detection technology in a unique way to the problem of directly measuring internal contact pressure wherein a thin film is undergoing compression in the interfacial region between two solid surfaces.

The present invention is founded on our discovery that a correlative relationship exists between the reflection or transmission amplitude of an acoustic pulse or ultrasonic elastic wave of constant incident amplitude, being directed at a liquid film undergoing compression in the interfacial region between two solid surfaces, and the contact pressure on said solid surfaces. More specifically, it was discovered that the greater the contact pressure on either interface, the greater was the proportion of the incident signal transmitted through the interfacial region. The proportion of the incident signal reflected from the interfacial region was correspondingly reduced.

For the purposes of definition herein, and in conformance with the terminology of the art, the ratio of transmitted amplitude to incident amplitude is called the "transmission coefficient" and the ratio of reflected amplitude to incident amplitude is called the "reflection coefficient".

The discovered relationship is based upon the following understandings. The energy of the elastic wave is related to variations of the pressure and displacement amplitudes in the elastic medium. When referenced to the incident wave amplitude, the amplitude variations of an elastic wave reflected from or transmitted through a thin liquid film entrapped between two solids essentially depends upon variations in the film properties and not on the metal or other boundary materials properties. These film properties are the film thickness and internal properties of the film material, namely the speed of sound therein and the density thereof. Therefore, according to these understandings, the reflection and transmission coefficient will vary as a function of the contact pressure being carried by the solid surfaces because the film properties are influenced by this contact pressure. Thus, by maintaining a constant incident amplitude reference and by measuring the reflection amplitude before and after the application of a pressure change thereto, the change in reflection coefficient due to the internal contact pressure change can be established. If one of these amplitudes is obtained when the solid surfaces are at zero pressure, the absolute contact pressure can be indicated.

In accordance with a preferred embodiment of the present invention, a method is provided for determining contact pressure wherein a thin liquid film is undergoing compression in the interfacial region between two solid surfaces, which method comprises: directing an acoustic pulse of constant incident amplitude at either solid interface; establishing a measure of the reference reflection coefficient of the interface therein, which reference is indicative of the incident amplitude (if the reference is being established at zero contact pressure, the condition of the interface may be defined with or without the film material present, and with or without the two bodies in intimate contact); establishing a measure of the reflection coefficient of the interface when the interface is bearing a different contact pressure; and computing from the reference and loaded measurements a measure indicative of the change in contact pressure.

The change in contact pressure can similarly be indicated by directing an acoustic pulse of constant incident amplitude at either solid interface and establishing a measure of the transmission coefficients of the interfacial region at reference and loaded conditions.

In another aspect of the invention, a measure of the reflection coefficient or transmission coefficient can be established by directing an acoustic pulse at either solid interface and controlling the incident amplitude of said pulse to maintain the reflected amplitude or transmitted amplitude constant. A measure of the incident amplitude can therefore be used to establish a measure of the reflection coefficient or transmission coefficient in the reference and loaded conditions.

In a further aspect of the invention, a measure of the reflection coefficient or transmission coefficient can be established by directing an acoustic pulse at either solid interface and establishing a measure of the reflected amplitude and transmitted amplitude of said pulse. This is possible because the reflected pulse energy plus the transmitted pulse energy equal the incident pulse energy. A measure of the reflected and transmitted amplitudes can therefore be used to establish a measure of the reflection coefficient or transmission coefficient in the reference and loaded conditions.

By providing a calibration curve which correlates a range of measured contact pressures with a corresponding range of measures of reflection or transmission coefficients, an absolute measure of the contact pressure on the mating solid interfaces undergoing compression may thereby be obtained.

The same procedure for establishing reference coefficients must be followed when establishing the calibration curve and measuring contact pressure. Specifically, both measurements may be taken either with the film material present or not with the two bodies in intimate contact or not.

More generally, the invention provides in one aspect a method for determining a measure of contact pressure wherein a thin liquid film is undergoing compression in the interfacial region between two solid surfaces, said film forming a part of the interfacial region, comprising:

directing an acoustic pulse at said thin liquid film; and

establishing a measure of the reflection coefficient or transmission coefficient of the interfacial region to provide the measure of contact pressure.

Various preferred and/or optional features of the invention are as set out in the dependent Claims 2 to 11 appended hereto.

For a better understanding of the invention and to show how the same may be carried into effect, reference will now be made, by way of example, to the accompanying diagrammatic drawings in which:

Figure 1 is a schematic diagram of an apparatus utilised in carrying out a method according to the present invention;

Figure 2 is a plot of ultrasonic reflection amplitude ratio expressed in decibels versus contact pressure (i.e., a calibration curve); and

Figure 3 is a scan of contact pressure (derived from the calibration curve of Figure 2) around the circumference of a premium connection seal after make-up).

Whilst the description of the determination of thin film contact pressure given herein refers specifically to the make-up of premium tubing connections, it will be readily understood that the scope of the invention encompasses measurement of contact pressure in any thin liquid film undergoing compression between two solid bodies.

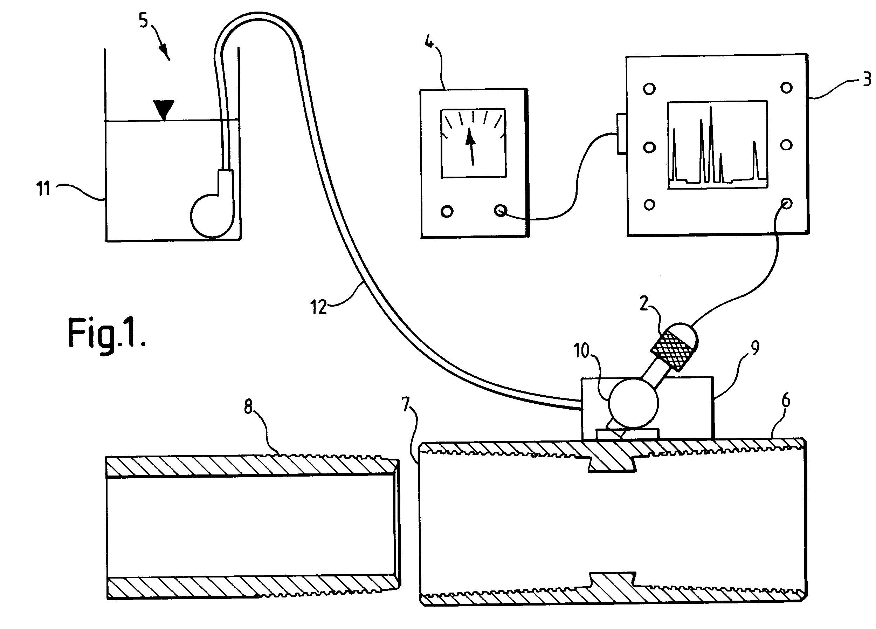

Turning to Figure 1, there is shown the apparatus used for the measurement of contact pressure where a thread compound (American Petroleum Institute Modified) (API) film was compressed between "metal-to-metal" surfaces in a tubing premium connection. The apparatus included an ultrasonic probe 2, an ultrasonic flaw detector (UFD) 3, a recorder 4, and a water supply system 5. The apparatus was used to determine contact pressure at the contacting surface "X" within a tubing connection 6 consisting of a box 7 and pin 8.

The ultrasonic probe 2 was mounted on a positioning jig 9, to hold it in the correct position on, and in correct orientation to, the tubing box 7. The ultrasonic probe 2 used was a commercially available unit obtained from Harisonic Laboratories Inc., Stamford, Conn. The details of the probe were: model number 12, 1502T, having a diameter: 3.2 mm (0.125 in), Focusing: $Y_o$ = 25.4 mm (1.00 in) and operating at a frequency of 15 MHz. The piezoelectric crystal source of the probe 2 was functional to transmit an acoustic wave pulse of constant amplitude upon application of a voltage pulse from UFD 3 and subsequently return a voltage proportional to acoustic amplitude upon receiving a reflected acoustic pulse.

Positioning jig 9 included a rotatable probe-receiving drum 10. The drum 10 was adapted to receive a flow of water, which water was in contact with the piezoelectric crystal of probe 2 and the tubing box 7. The water was pumped to the drum 10 from a low pressure water supply tank 11 via a conduit 12. The water functioned as an acoustic couplant between the probe 2 and the coupling 6.

UFD 3 was electrically connected to probe 2. UFD 3 was equipped with a linear gated peak reader amplitude output, and gain and frequency control. The unit used was Model USL 48, obtained from Kraut-Kramer Branson, Lewistown, PA. It functioned to provide a linear measure of the peak amplitude of the gated acoustic pulse.

The recorder 4 was electrically connected to the UFD 3. The recorder 4 measured the voltage output corresponding to the gated peak reader output. One recorder used was a commercially available digital voltmeter compatible with the UFD amplitude gate output.

In operation, the instruments were connected up in accordance with Figure 1. Probe 2 was positioned in the positioning jig 9 and focussed on the clean metal surface of the box 7, so that the acoustic beam to be reflected was to be obtained from the internal seal surface "X" at which the stress was to be measured. Compressional waves were used, although shear waves could also be used.

The gain and amplitude gate of the detector 3 was adjusted to measure the amplitude of the reflection coming from surface "X" and the detector output was recorded by the recorder 4. Thus, the reflected signal amplitude, taken by a measure of the voltage output from the gated reflection amplitude peak reader on the detector 3, reflected from the metal surface "X" of the box 7, without the application of thread compound thereto and without intimate contact of the pin surface, was determined. These "free surface reflection amplitudes" ($V_{fi}$), obtained at several circumferential positions around the box, were the initial reference amplitude measurements.

API Modified thread compound was applied to the thread and sealing surfaces of the pin 8 and/or box 7, and the pin was screwed into the box. The seal surface "X" was loaded as a result, compressing the film between the solid steel-to-steel surfaces. Reflected signal amplitudes ($V_{li}$) were recorded from the loaded seal surface at the same circumferential positions as $V_{fi}$.

Stated otherwise, the procedure followed comprised obtaining a set of reference reflection amplitude measurements ($f_i$) at certain locations around the specimen seal surface while it was clean, unloaded, and exposed to the atmosphere only. A second set of readings ($l_i$) taken (with an acoustic pulse providing the same incident amplitude) at the same locations with the surfaces loaded and the film present were then expressed as a portion of or ratio ($r_i$) of the free surface readings. This was the "reflection amplitude ratio" and it is expressed mathematically by:

$$r_i = \frac{l_i}{f_i}$$

where,

$r_i$ = reflection amplitude ratio at a circumferential location "i";

$l_i$ = loaded reflection amplitude at "i" for any contact pressure; and

$f_i$ = reference reflection amplitude at "i" which may be any measure in constant proportion to the incident acoustic amplitude when $l_i$ was obtained.

By positioning a transmitting probe 2 internally (or externally) of box 7 and having the receiver of the UFD on the outside (or inside) of the specimen and measuring the change in amplitude of the transmitted pulse upon application of contact pressure to the thin liquid film, a measure indicative of the contact pressure thereof may be also established.

Because the raw voltage outputs from recorder 4 are proportional to the acoustic pulse amplitude, the ratio $r_i$ can be calculated from the raw voltage outputs as follows:

$$r_i = \frac{V_{li},}{V_{fi}}$$

where

$V_{li}$ = "raw" loaded reflection signal voltage at "i" (voltage output from the gated reflection amplitude peak reader on UFD normalised to the same gain as used for obtaining $V_{fi}$) for any contact pressure; and

$V_{fi}$ = "raw" reference reflection signal voltage at "i", from the free surface (normalised for any incident amplitude changes).

URAP (dB) = 20 log ($r_i$) termed URAP measurement) expresses the ratio $r_i$ in decibels.

The ratio method acts to provide a consistent incident energy reference and to normalise the URAP measurement for amplitude changes that may occur due to extraneous variables not associated with changes in the reflection or transmission coefficient of the seal surface. Examples of extraneous variables along the signal path are surface irregularities or inclusions in the solid body. Such normalization may not be necessary in all cases: in ideal circumstances, the change in contact pressure is calculable directly from the amplitude $l_i$, if a calibration curve has been constructed relating $l_i$ and contact pressure.

It is to be noted that the magnitude of the thin liquid film would encompass a gap between metal-to-metal seal surfaces less than about $1/2\ \lambda$ (where $\lambda$ is the wavelength of the acoustic pulse).

In order to obtain an absolute measure of the contact pressure of the test specimen it was necessary to first provide a calibration curve which correlates a range of measured contact pressures with a corresponding range of URAP measurements. To this end, a calibration jig (not shown) was provided which was functional to apply a known force on two mating steel surfaces of known surface area where the interfacial region contained an entrapped thread compound film. The corresponding URAP measurement at each increment of applied force was obtained using the instrumentation described herein. The absolute contact pressure was determined using the relationship

$$\text{Contact Pressure} = \frac{\text{Force}}{\text{Area}}$$

The URAP measurement is a function of several independent variables namely, the acoustic pulse frequency, surface roughness, rotation and composition of the lubricant. Thus, the experimental studies were necessarily parametric.

The following examples taken in conjunction with the results plotted in the accompanying figures demonstrate the operability of the present invention.

## Example I

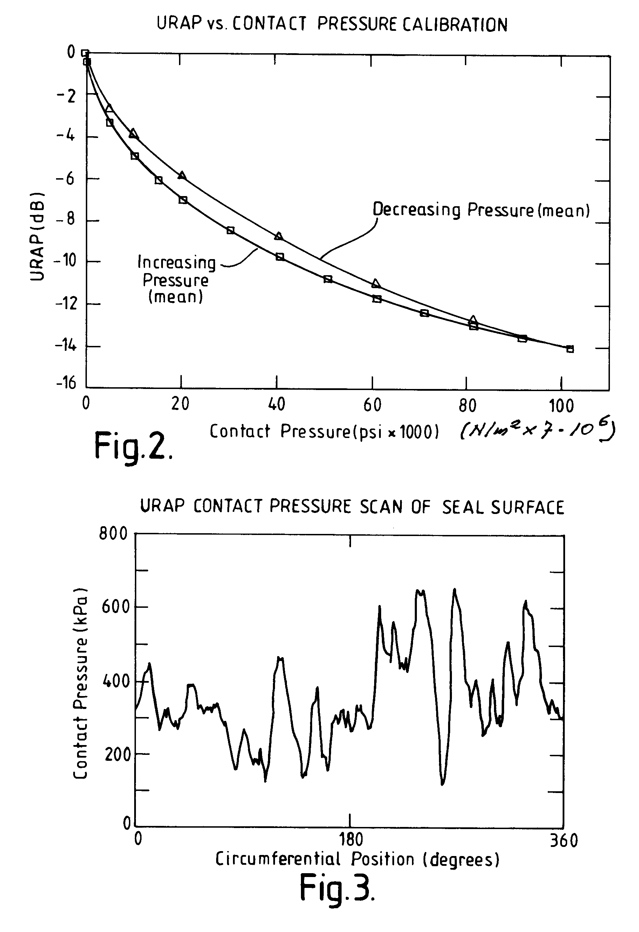

This example is provided to demonstrate the relationship between the URAP measurement and contact pressure in a calibration specimen. A 15 MHz ultrasonic probe was utilised. To simulate typical interfacial roughness of tubing seal surfaces the calibration specimen was machined to a surface roughness of $1.52 \times 10^{-3}$ mm. To approximate typical sliding shear in the film during make-up, the bottom portion of the calibration specimen was rotated in relation to the proportion. Rotation was increased as contact pressure increased: rotation was input at 0.66 mm/169 kPa (0.026 in/10,000 psi) of contact pressure. The plot of the URAP measurement versus contact pressure is given in Figure 2 appended hereto.

This example demonstrates that the amplitude of elastic waves reflected from or transmitted through a thin film of compressible liquid, disposed between two solid bodies and bearing contact pressure, depends on this contact pressure.

## Example II

The specimen used for this example was a standard 89 mm 13.7 kg/m premium tubing connection as manufactured by VAM Canada Ltd. A 15 MHz probe was installed in the positioning jig, acoustically coupled to the metal surface of the specimen, and focussed on the seal surface therein. The reference reflection amplitude of the specimen was measured at several arbitrarily selected locations around the circumference. Similar reflection amplitude measurements were made when the connection was made up. The URAP measurement was computed as discussed above and converted to contact pressure based on the correlative relationship shown in Figure 2.

The results are given in Figure 3 attached hereto, which shows the seal surface contact pressure around the circumference of the connection.

## Claims

1. A method for determining a measure of contact pressure wherein a thin liquid film is undergoing compression in the interfacial region between two solid surfaces, said film forming a part of the interfacial region, comprising:

directing an acoustic pulse at said thin liquid film; and

establishing a measure of the reflection coefficient or transmission coefficient of the interfacial region to provide the measure of contact pressure.

2. A method according to Claim 1, comprising:

directing said acoustic pulse at said thin liquid film at constant incident amplitude; and

establishing a measure of the amplitude of the acoustic pulse reflected or transmitted therethrough, to establish said measure of the reflection coefficient or transmission coefficient.

3. A method according to Claim 1, comprising:

directing said acoustic pulse at said thin liquid film and controlling the incident amplitude of said pulse to maintain constant one of the reflected or transmitted amplitudes; and

establishing a measure of the incident amplitude, to establish a measure of the reflection coefficient or transmission coefficient, and thereby provide the measure of contact pressure.

4. A method according to Claim 2, comprising:

establishing a measure of the amplitude of both the acoustic pulse reflected from, and the acoustic pulse transmitted through said thin liquid film; and

establishing from said measurements a measure of the reflection coefficient or the transmission coefficient, thereby to provide the measure of contact pressure.

5. A method according to any of Claims 1 to 4, including the preliminary steps of:

(a) directing an acoustic pulse at either solid interface; and

(b) establishing a reference measure of the reflection coefficient or transmission coefficient of the acoustic pulse reflected therefrom or transmitted therethrough and the subsequent steps of:

(c) changing the contact pressure on the interfacial region;

(d) directing an acoustic pulse at the thin liquid film and establishing a measure of the reflection coefficient or transmission coefficient of the loaded interfacial region; and

(e) computing from the reference and loaded reflection coefficients or transmission coefficients a measure indicative of the change in contact pressure.

6. A method according to Claim 5, wherein:

the acoustic pulse of step (a) is of constant incident amplitude.

7. A method according to Claim 5, comprising:

controlling the incident amplitude of the acoustic pulse of step (a) to maintain constant one of the reflected or transmitted amplitudes; and wherein

the measure of reflection coefficient or transmission coefficient in step (b) is established by monitoring the incident amplitude.

8. A method according to Claim 5, wherein:

the measure of step (b) established by obtaining measures of both the amplitude of the acoustic pulse reflected from and the amplitude of the acoustic pulse transmitted through the respective solid interface.

9. A method according to any of the preceding claims, wherein:

the thickness of the interfacial region is less than about 0.5 $\lambda$ of the acoustic pulse where $\lambda$ is the wavelength of the acoustic pulse in the thin liquid film.

10. A method according to any of the preceding claims, wherein:

the acoustic pulse comprises a compression wave.

11. A method according to any of the preceding claims, wherein said solid surfaces are sealing surfaces of an oilfield tubular connection.

12. A method according to Claim 11, wherein said oilfield tubular connection has pin and box parts and said thin liquid film comprises a thread compound undergoing compression between said sealing surfaces.

## Patentansprüche

1. Verfahren zum Bestimmen eines Maßes eines Kontaktdrucks, wobei ein dünner Flüssigkeitsfilm einer Kompression im Grenzflächenbereich zwischen zwei Festkörperflächen unterzogen wird und wobei der Film einen Teil des Grenzflächenbereiches bildet, mit:

Richten eines akustischen Impulses auf den dünnen Flüssigkeitsfilm; und

Festsetzen eines Maßes des Reflexionskoeffizienten oder des Transmissionskoeffizienten des Grenzflächenbereiches, um ein MaB des Kontaktdruckes bereitzustellen.

2. Verfahren nach Anspruch 1, mit:

Richten des akustischen Impulses auf den dünnen Flüssigkeitsfilm mit einer konstant einfallenden Amplitude; und

Festsetzen eines Maßes der Amplitude des reflektierten oder transmittierten akustischen Impulses, um das Maß des Reflexionskoeffizienten oder des Transmissionskoeffizienten festzusetzen.

3. Verfahren nach Anspruch 1, mit:

Richten des akustischen Impulses auf den dünnen Flüssigkeitsfilm und Steuern der einfallenden Amplitude des Impulses, um eine konstante reflektierte oder transmittierte Amplitude aufrecht zu erhalten; und

Festsetzen eines Maßes der einfallenden Amplitude, um ein MaB des Reflexionskoeffizienten oder Transmissionskoeffizienten festzusetzen, und um hierdurch das Maß des Kontaktdrucks bereitzustellen.

4. Verfahren nach Anspruch 2, mit:

Festsetzen eines Maßes der Amplitude von sowohl des vom dünnen Flüsigkeitsfilm reflektierten akustischen Impulses als auch des durch den dünnen Flüssigkeitsfilm transmittierten akustischen Impulses; und

Festsetzen eines Maßes des Reflexionskoeffizienten oder des Transmissionskoeffizienten durch diese Messungen, um hierdurch das Maß des Kontaktdrucks bereitzustellen.

5. Verfahren nach einem der Ansprüche 1 bis 4, das die folgenden Vorstufen aufweist:

(a) Richten eines akustischen Impulses auf beide Festkörperzwischenflächen; und

(b) festsetzen eines Bezugsmaßes des Reflexionskoeffizienten oder des Transmissionskoeffizienten des reflektierten oder transmittierten akustischen Impulses, und mit den nachfolgenden Stufen:

(c) Ändern des Kontaktdrucks auf den Grenzflächenbereich;

(d) Richten eines akustischen Impulses auf den dünnen Flüssigkeitsfilm und Festsetzen eines Maßes des Reflexionskoeffizienten oder Tramissionskoeffizienten des belasteten Grenzflächenbereiches; und

(e) Berechnen aus dem Bezugsmaß und den Reflexionskoeffizienten oder Transmissionskoeffizienten bei Belastung ein Maß, das die Änderung im Kontaktdruck angibt.

6. Verfahren nach Anspruch 5, wobei:

der akustische Impuls von Stufe (a) eine konstant einfallende Amplitude hat.

7. Verfahren nach Anspruch 5, mit:

Steuern der einfallenden Amplitude des akustischen Impulses von Stufe (a), um eine konstante reflektierte oder transmittierte Amplitude aufrecht zu erhalten; und wobei

das Maß des Reflexionskoeffizienten oder des Transmissionskoeffizienten in Stufe (b) durch Überwachen der einfallenden Amplitude festgesetzt wird.

8. Verfahren nach Anspruch 5, wobei:

das Maß der Stufe (b) festgesetzt wird durch Erlangen der Maße sowohl der Amplitude des von der jeweiligen Festkörperzwischenfläche reflektierten akustischen Impulses als auch des durch die jeweilige Festkörperzwischenfläche transmittierte Amplitude des akustischen Impulses.

9. Verfahren nach einem der vorherigen Ansprüche, wobei:

die Dicke des Grenzflächenbereiches kleiner als ungefähr 0,5 $\lambda$ des akustischen Impulses ist, wobei $\lambda$ die Wellenlänge des akustischen Impulses in dem dünnen Flüssigkeitsfilm ist.

10. Verfahren nach einem der vorherigen Ansprüche, wobei:

der akustische Impuls eine Kompressionswelle umfaßt.

11. Verfahren nach einem der vorherigen Ansprüche, wobei die Festkörperflächen Abdichtflächen einer rohrförmigen Verbindung auf einem Erdölfeld sind.

12. Verfahren nach Anspruch 11, wobei die rohrförmige Verbindung auf einem Erdölfeld ein Stiftteil und ein Behälterteil aufweist, und wobei der dünne Flüssigkeitsfilm eine Gewindevergußmasse umfaßt, die einer Kompression zwischen den Abdichtflächen unterworfen wird.

## Revendications

1. Procédé pour déterminer une valeur de pression de contact, dans lequel un film liquide mince est soumis à une compression dans la région d'interface entre deux surfaces solides, ledit film formant une partie de la région d'interface, ledit procédé comprenant des opérations consistant à :

diriger une impulsion acoustique sur ledit film liquide mince ; et

réaliser une mesure du coefficient de réflexion ou du coefficient de transmission de la région d'interface pour obtenir la valeur de pression de contact.

2. Procédé selon la revendication 1, comprenant les opérations consistant à :

diriger ladite impulsion acoustique sur ledit film liquide mince à amplitude incidente constante ; et

réaliser une mesure de l'amplitude de l'impulsion acoustique réfléchie ou transmise à travers lui, pour réaliser ladite mesure du coefficient de réflexion ou du coefficient de transmission.

3. Procédé selon la revendication 1, comprenant les opérations consistant à :

diriger ladite impulsion acoustique sur ledit film liquide mince et régler l'amplitude incidente de ladite impulsion pour maintenir constante l'une des amplitudes réfléchie ou transmise ; et

réaliser une mesure de l'amplitude incidente, pour réaliser une mesure du coefficient de réflexion ou du coefficient de transmission, et obtenir de cette façon la valeur de pression de contact.

4. Procédé selon la revendication 2, comprenant les opérations consistant à :

réaliser une mesure de l'amplitude à la fois de l'impulsion acoustique réfléchie par, et de l'impulsion transmise à travers, ledit film liquide mince ; et

réaliser à partir desdites mesures une mesure du coefficient de réflexion ou du coefficient de transmission, pour obtenir de cette façon la valeur de pression de contact.

5. Procédé selon l'une quelconque des revendications 1 à 4, comprenant les étapes préliminaires consistant à :

(a) diriger une impulsion acoustique sur l'une ou l'autre des interfaces solides ; et

(b) réaliser une mesure de référence du coefficient de réflexion ou du coefficient de transmission de l'impulsion acoustique réfléchie par ou transmise à travers elle ; et les étapes ultérieures consistant à :

(c) changer la pression de contact sur la région d'interface ;

(d) diriger une impulsion acoustique sur le film liquide mince et réaliser une mesure du coefficient de réflexion ou du coefficient de transmission de la région d'interface chargée ; et

(e) calculer à partir des coefficients de réflexion ou des coefficients de transmission, de référence et chargés, une valeur indicatrice du changement de pression de contact.

6. Procédé selon la revendication 5, dans lequel l'impulsion acoustique de l'étape (a) est d'amplitude incidente constante.

7. Procédé selon la revendication 5, comprenant l'opération consistant à régler l'amplitude incidente de l'impulsion acoustique de l'étape (a), pour maintenir constante l'une des amplitudes réfléchie ou transmise ; et

dans lequel la mesure du coefficient de réflexion ou du coefficient de transmission à l'étape (b) est réalisée par réglage de l'amplitude incidente.

8. Procédé selon la revendication 5, dans lequel la mesure de l'étape (b) est réalisée par les mesures à la fois de l'amplitude de l'impulsion acoustique réfléchie par, et de l'amplitude de l'impulsion acoustique transmise à travers l'interface solide respective.

9. Procédé selon l'une quelconque des revendications précédentes, dans lequel

l'épaisseur de la région d'interface est inférieure à environ 0,5 $\lambda$ de l'impulsion acoustique, où $\lambda$ est la longueur d'onde de l'impulsion acoustique dans le film liquide mince.

10. Procédé selon l'une quelconque des revendications précédentes,

dans lequel l'impulsion acoustique comprend une onde de compression.

11. Procédé selon l'une quelconque des revendications précédentes, dans lequel lesdites surfaces solides sont des surfaces d'étanchéité d'un accouplement tubulaire de champ pétrolifère.

12. Procédé selon la revendication 11, dans lequel ledit accouplement tubulaire de champ pétrolifère a des parties de type broches et de type manchons, et ledit film liquide mince comprend une composition pour filetage soumise à une compression entre lesdites surfaces d'étanchéité.

Fig.1.

EP 0 309 289 B1

URAP vs. CONTACT PRESSURE CALIBRATION

Fig.2.

URAP CONTACT PRESSURE SCAN OF SEAL SURFACE

Fig.3.